# EUROPEAN PATENT APPLICATION

(11) **EP 4 586 466 A1**
(43) Date of publication of application: **16.07.2025**
(21) Application number: 24167309.4
(22) Date of filing: 28.03.2024
(51) Int. Cl.: H02K 1/276, H02K 15/03, H02K 15/12

(54) **MOTOR ROTOR STRUCTURE**

(30) Priority: 09.01.2024 CN 202410032849
(71) Applicant: Delta Electronics, Inc., Taoyuan City 33341 (TW)
(72) Inventor: SHEU, Hong-Cheng, 333 Taoyuan City (TW); LIN, Hsing-Cheng, 333 Taoyuan City (TW); LO, Hung-Chi, 333 Taoyuan City (TW); WEN, Ching-Yen, 333 Taoyuan City (TW)
(74) Representative: Riccardi, Elisa

(57) **Abstract**

A motor rotor structure includes a silicon steel body and an injection molding material. The silicon steel body includes a plurality of stacked silicon steel laminations, wherein each silicon steel lamination includes a plurality of stacked silicon steel thin sheets or layers. Each silicon steel lamination further includes at least one magnet pocket and at least one corresponding weight-deducting hole. Each silicon steel lamination further includes at least one magnet located in the magnet pocket to form an air gap between the magnet and the magnet pocket, wherein a flow channel is connected between the air gap and the weight-deducting hole. The injection molding material is filled into the weight-deducting hole and flown through the flow channel, the air gap, and entered into the magnet pocket, and cured to fix the magnet.

## Description

### BACKGROUND

### Field of Invention

The present disclosure relates to a motor rotor structure, and more particularly to a motor rotor structure in which magnets are secured by injection molding materials.

### Description of Related Art

In the application of traction motor, when the rotor assembly is assembled, the magnet in the magnet pocket of the rotor silicon steel lamination needs to be stable such that the magnet will not be affected by rotation, vibration and other factors during highspeed rotation. The magnet will cause friction or impact, which will lead to related problems such as rust and cracking of the magnet, resulting in the risk of losing motor performance. Therefore, the process of fixing the magnets in the rotor silicon steel lamination is very critical.

It is known to use injection molding materials to fill the magnet pockets of the rotor silicon steel lamination and solidify to fix the magnets. Because the air gaps for injection molding of the rotor silicon steel lamination are usually designed to be a small hole, and when stacking the rotor silicon steel laminations, a staggered pole manner must be performed for magnetic performance, a cross-sectional area of the injection molding channel will be further limited, thereby resulting in a risk that the injection molding material may not be fully filled the magnet pocket.

### SUMMARY

The present disclosure proposes a motor rotor structure for overcoming or alleviating the problems of the prior art.

In one or more embodiments, a motor rotor structure includes a silicon steel body and an injection molding material. The silicon steel body includes a plurality of stacked silicon steel laminations, wherein each silicon steel lamination includes a plurality of stacked silicon steel thin sheets. Each silicon steel lamination further includes at least one magnet pocket and at least one corresponding weight-deducting hole, wherein the weight-deducting hole is closer to a central shaft of the silicon steel body than the magnet pocket. Each silicon steel lamination further includes at least one magnet located in the magnet pocket to form an air gap between the magnet and the magnet pocket, wherein a flow channel is connected between the air gap and the weight-deducting hole. The injection molding material is filled into the weight-deducting hole and flown through the flow channel, the air gap, and entered into the magnet pocket, and cured to fix the magnet.

The motor rotor structure disclosed herein is designed for a silicon steel sheet or layer with a small air gap. Using a larger weight-deducting hole to replace the air gap as a plastic injection port with a flow channel can effectively optimize injection molding of the silicon steel laminations stacked in a staggered manner. After stacking the silicon steel laminations, there is a risk that the magnet pockets cannot be filled with injection molding material due to the small cross-sectional area of the air gap. In addition, using weight-deducting holes with flow channels can reduce the number of injection ports, thereby simplifying the complexity of the mold channels, and optimize injection molding material utilization. Double V-shaped magnet pockets can also be designed to add flow channels between the large and small magnet pockets to effectively fill the small magnet pockets.

It is to be understood that both the foregoing general description and the following detailed description are by examples, and are intended to provide further explanation of the invention as claimed.

### BRIEF DESCRIPTION OF THE DRAWINGS

The invention can be more fully understood by reading the following detailed description of the embodiment, with reference made to the accompanying drawings as follows:
Fig. 1 illustrates a perspective view of a motor rotor structure according to an embodiment of the present disclosure;
Fig. 2 illustrates a perspective view of a single silicon steel lamination according to an embodiment of the present disclosure;
Fig. 3 illustrates an exploded view of the single silicon steel lamination in Fig. 2;
Fig. 4 illustrates a perspective view of how to inject molding material into a motor rotor structure according to an embodiment of the present disclosure;
Fig. 5 illustrates a cross-sectional view along section line 5-5 in Fig. 4;
Fig. 6 illustrates a perspective view of a single silicon steel lamination according to another embodiment of the present disclosure;
Fig. 7 illustrates an exploded view of the single silicon steel lamination in Fig. 6; and
Fig. 8 illustrates a perspective view of how to inject molding material into a motor rotor structure according to another embodiment of the present disclosure.

### DETAILED DESCRIPTION

Reference will now be made in detail to the present embodiments, examples of which are illustrated in the accompanying drawings. Wherever possible, the same reference numbers are used in the drawings and the description to refer to the same or like parts.

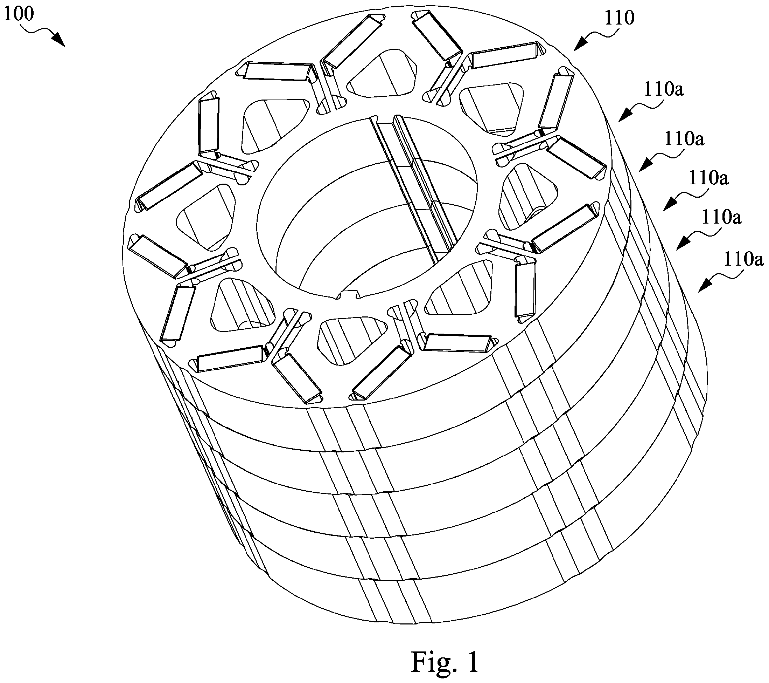

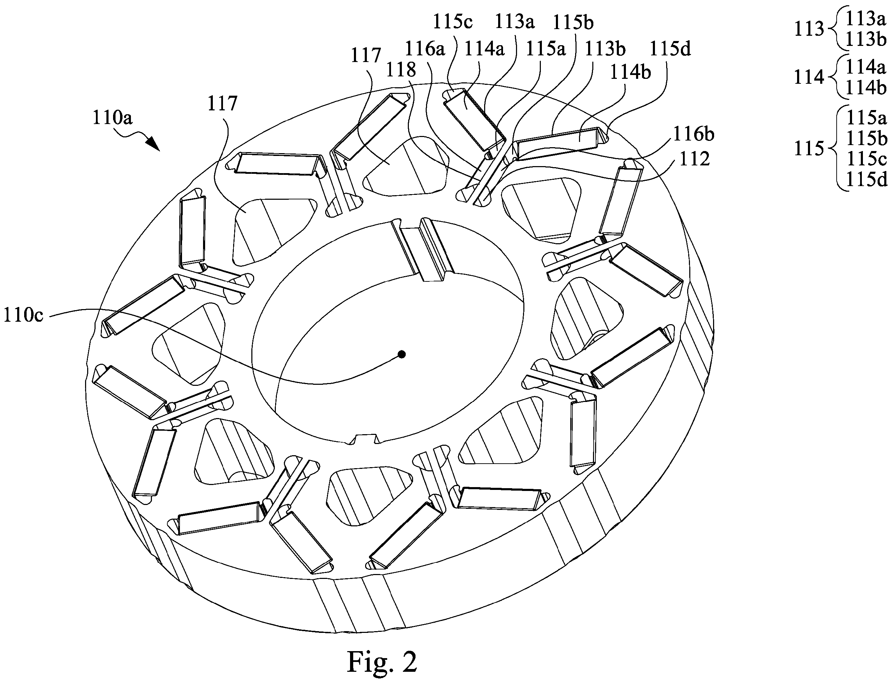

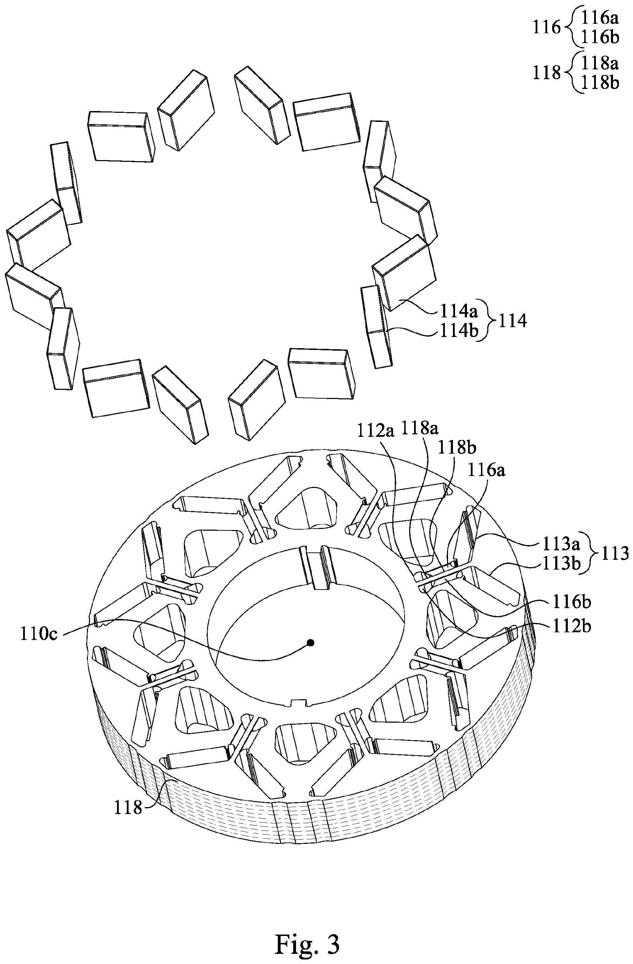

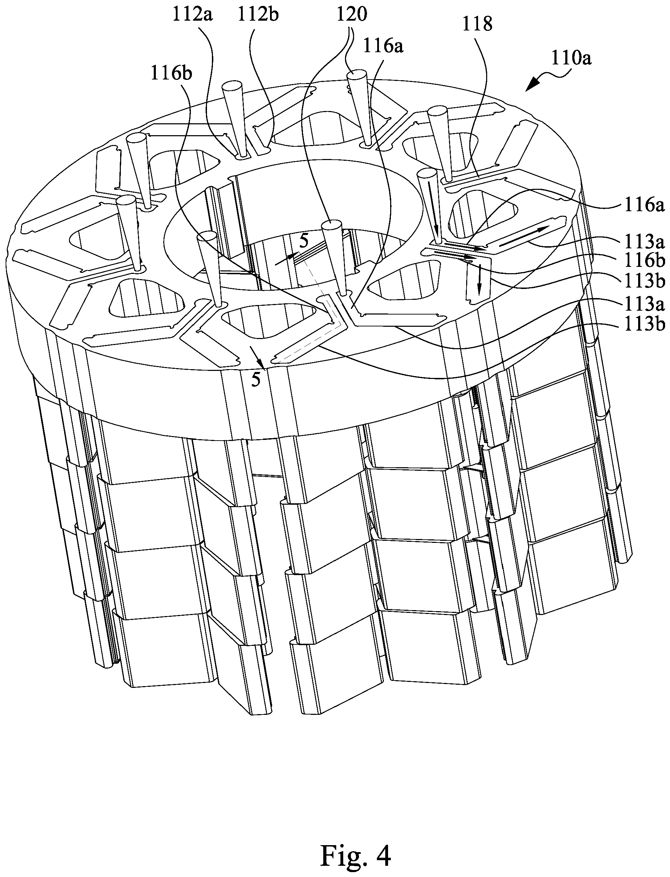

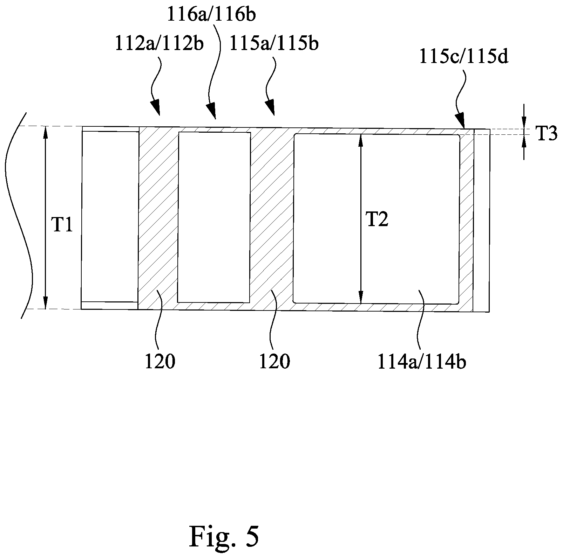

Reference is made to Figs. 1-5, Fig. 1 illustrates a perspective view of a motor rotor structure according to an embodiment of the present disclosure; Fig. 2 illustrates a perspective view of a single silicon steel lamination according to an embodiment of the present disclosure; Fig. 3 illustrates an exploded view of the single silicon steel lamination in Fig. 2; Fig. 4 illustrates a perspective view of how to inject molding material into a motor rotor structure according to an embodiment of the present disclosure; Fig. 5 illustrates a cross-sectional view along section line 5-5 in Fig. 4. The motor rotor structure 100 includes a silicon steel body 110 and a plurality of magnets 114 contained therein. The silicon steel body 110 includes a plurality of silicon steel laminations 110a stacked in a staggered manner. Each silicon steel lamination 110a is formed by stacking a plurality of silicon steel thin sheets or layers 118 (see Figure 3).

In some embodiments of the present invention, each silicon steel lamination 110a includes a plurality of magnet pockets 113 and a plurality of weight-deducting holes (112, 117). The magnet pocket 113 is used to accommodate the magnet 114, and the weight-deducting holes (112, 117) are used to reduce the overall weight of the silicon steel body 110. In some embodiments of the present invention, the weight-deducting hole (112, 117) is closer to the central shaft 110c of the silicon steel body 110 than the magnet pocket 113.

When the magnet 114 is placed in the magnet pocket 113, a gap between the magnet pocket 113 and the magnet 114 forms an air gap 115. In some embodiments of the present invention, the magnet 114 is generally a strip with a rectangular cross-section, and the air gaps 115 are located at both ends of the magnet pocket 113 in the length direction. After an injection molding material 120 is filled into the air gap 115, the injection molding material 120 is cured to fix the magnet 114 in the magnet pocket 113. In case only the air gaps 115 at both ends of the magnet pocket 113 are used as inlets for filling the injection molding material 120, the number of flow channels designed through the mold needs a lot. In addition, if an opening area of the air gap 115 is too small, after multiple silicon steel laminations 110a are stacked in a staggered manner, the connecting cross-sectional area of the openings of the air gaps 115 adjacent to each stack of silicon steel laminations will be further reduced, which may easily result in a risk of the magnet pocket 113 not being fully filled with the injection molding material.

In some embodiments of the present invention, a flow channel 116 is connected between the air gap 115 and the weight-deducting hole 112 to be fluidly communicable, and the weight-deducting hole 112 is used as an inlet for filling the injection molding material 120. After the injection molding material 120 is injected into the weight-deducting hole 112, the injection molding material 120 is then flown to the air gap 115 through the flow channel 116. This design helps reduce a number of channles in a mold design by half. Specifically, a flow channel 116a is connected between the weight-deducting hole 112 and the air gap 115a to be fluidly communicable, and another flow channel 116b is connected between the weight-deducting hole 112 and the air gap 115b to be fluidly communicable.

In some embodiments of the present invention (with reference to Fig. 5), in each silicon steel lamination 110a, an axial depth of the flow channel (116, 116a, 116b) is smaller than an axial depth of the weight-deducting hole (112, 112a, 112b) or the air gap (115, 115a-115d). Therefore, an axial thickness T3 of the injection molding material 120 within the flow channel (116, 116a, 116b) is smaller than an axial thickness T1 of the injection molding material 120 within the weight-deducting hole (112, 112a, 112b) or the air gap (115, 115a-115d). In some embodiments of the present invention, the axial depth of the flow channel (116, 116a, 116b) is equal to a stacked axial thickness of a single, two or three silicon steel sheets. In other words, the axial thickness T3 of the injection molding material 120 within the flow channel (116, 116a, 116b) is equal to the stacked axial thickness of a single, two or three silicon steel sheets, or the axial thickness T3 of the injection molding material 120 within the flow channel (116, 116a, 116b) is greater than or equal to the thickness of a single silicon steel sheet.

In some embodiments of the present invention, an opening of the weight-deducting hole 112 has a dividing strip 118a of a single silicon steel sheet thickness, and the dividing strip 118a is connected to a dividing wall 118b between the two flow channels (116a, 116b). The dividing wall 118b also has the thickness of a single silicon steel sheet (118). The dividing strip 118a is connected to the dividing wall 118b to prevent the dividing wall 118b with a single silicon steel sheet thickness from warping due to external force. Therefore, the dividing strip 118a only divides the weight-deducting hole 112 into two openings (112a, 112b), but does not divide the weight-deducting hole 112 into two uncirculated areas.

Referring to Figs. 4-5, when using the weight-deducting hole 112 is used as an inlet for filling the injection molding material 120 (referring to the arrows in Fig. 5), the injection can be made through either the opening 112a or the opening 112b, and flown to the two air gaps (115a, 115b) through the two flow channels (116a, 116b) respectively, and then fully filled into the two magnet pockets (113a, 113b) respectively.

In some embodiments of the present invention, each silicon steel lamination 110a includes multiple pairs of magnet pockets (113a, 113b), and each pair (i.e., every two) magnet pockets (113a, 113b) are arranged relative to the central shaft 110c to form V-shapes structure. When the weight-deducting hole 112 is used as the inlet to fill the injection molding material 120, the injection molding material 120 in each weight-deducting hole 112 can be flown to the air gaps (115a, 115b) of the two magnet pockets (113a, 113b) via the two flow channels (116a, 116b) respectively.

In some embodiments of the invention, an axial thickness T2 of the magnet 114 is less than the axial thickness T1 of each silicon steel lamination 1 10a. Referring to the arrows in Fig. 5, when the injection molding material 120 is flown into the air gap (115a, 115b) of the magnet pocket (113a, 1 13b), it is then flown across the magnet (114a, 114b) to another air gap (115c, 115d), so that the injection molding material 120 can be fully filled the magnet pocket (113a, 113b) to enclose and fix the magnets (114a, 114b). In some embodiments of the present invention, the air gap (115a, 115b) is closer to the central shaft 110c of the silicon steel body than the magnet (114a, 114b), and the air gap (115c, 115d) is farther away from the central shaft 110c of the silicon steel body than the magnet (114a, 114b).

In some embodiments of the present invention, the weight-deducting hole 112 is divided into two openings (112a, 112b) and has an opening area larger than an opening area of a single air gap (115a, 115b, 115c or 115d), so that a flow resistance of the injection molding material in the weight-deducting hole 112 is smaller (compared to a single air gap).

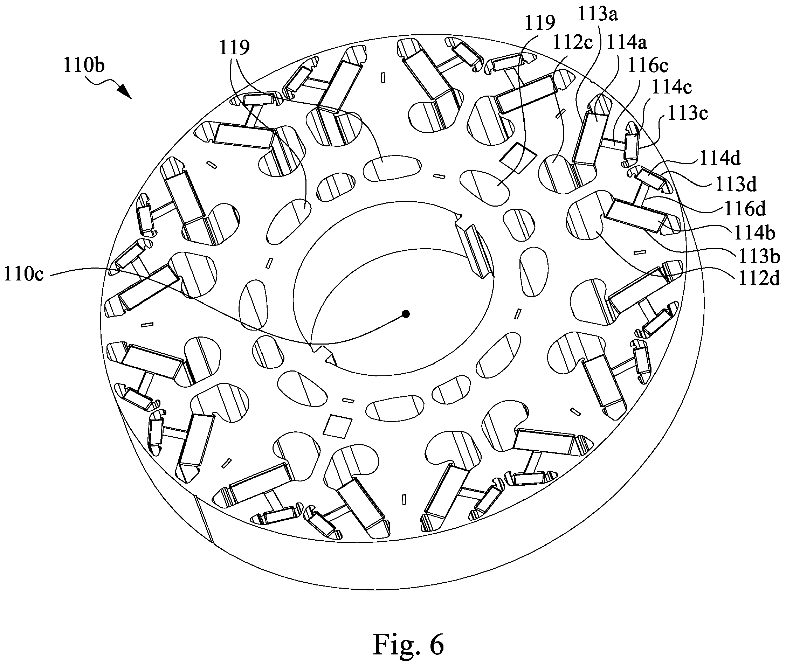

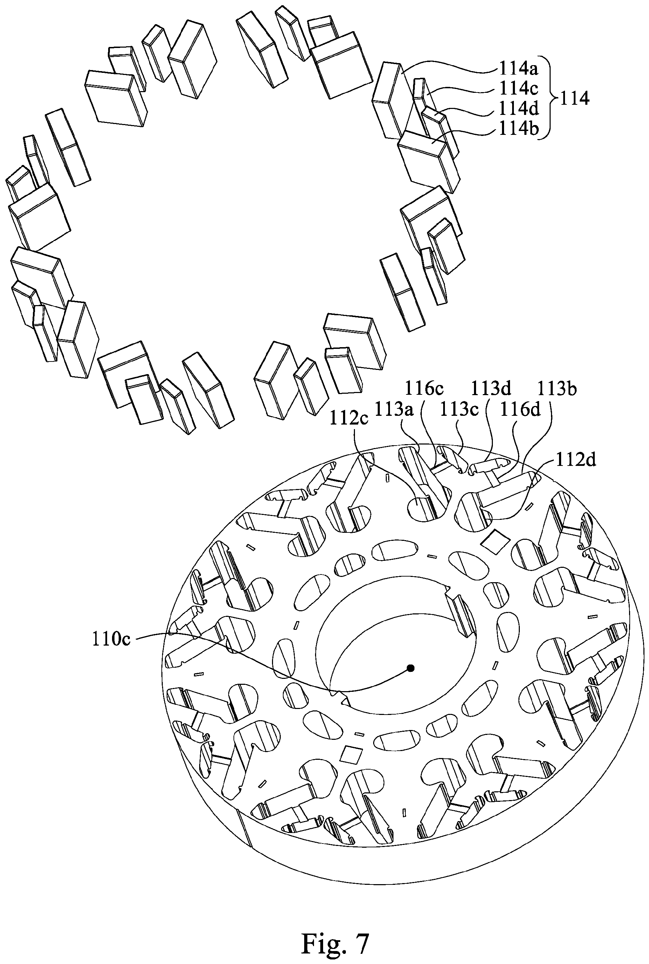

Reference is made to Figs. 6-7, Fig. 6 illustrates a perspective view of a single silicon steel lamination 110b according to another embodiment of the present disclosure, and Fig. 7 illustrates an exploded view of the single silicon steel lamination 110b in Fig. 6. The embodiments of Figs. 1 to 5 include plural pairs of magnet pockets (113a, 113b) arranged in a plural V-shapes structure, while the embodiments of Figs. 6 and 7 include plural pairs of magnet pockets (113a, 113b, 113c, 113d) arranged in multiple double V-shapes structure. Each group (a total of four) of magnet pockets includes two larger magnet pockets (113a, 113b) and two smaller magnet pockets (113c, 113d). The two larger magnet pockets (113a, 113b) are arranged in a larger V-shape closer to the central shaft 110c, and the two smaller magnet pockets (113c, 113d) are arranged in a smaller V-shape farther away from the central shaft 110c, forming an inner and outer double-layer V-shaped magnet pocket structure in a radial direction. In some embodiments of the present invention, the weight-deducting hole 112c is directly connected (i.e., fluidly communicable) to the magnet pocket 113a, and the weight-deducting hole 112d is directly connected (i.e., fluidly communicable) to the magnet pocket 113b. In other embodiments of the present invention, the embodiments in Figs. 6 and 7 can be equipped with the single weight-deducting hole 112 of the embodiments in Figs. 1 to 5 to be connected to two magnet pockets (113a, 113b) through two flow channels (116a, 116b). The single silicon steel lamination 110b also has a plurality of weight-deducting holes 119 closer to the central shaft 110c to reduce the overall weight of the silicon steel body.

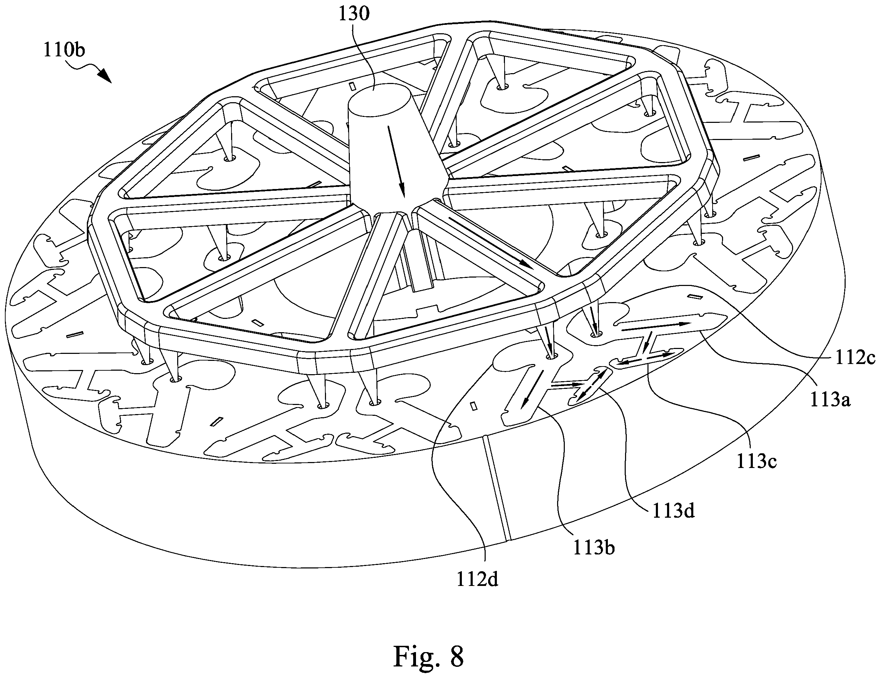

Reference is made to Fig. 8, which illustrates a perspective view of how to inject molding material into a motor rotor structure according to another embodiment of the present disclosure. In some embodiments of the present invention, two larger magnet pockets (113a, 113b) are respectively connected to (i.e., fluidly communicable) two smaller magnet pockets (113c, 113d) via two flow channels (116c, 116d). Referring to the arrows in Fig. 8, when the injection molding materia1130 is flown from the weight-deducting hole (112c, 112d) to the two larger magnet pockets (113a, 113b), it is then flown to the two smaller magnet pockets (113c, 113d) through the two flow channels (116c, 116d) respectively, so that the two smaller magnet pockets (113c, 113d) are easily filled with the injection molding material. Similar to the embodiments in Figs. 1 to 5 (see Fig. 5 for example), an axial depth of the two flow channels (116c, 116d) is smaller than an axial depth of the weight-deducting holes (112c, 112d), so the axial thickness (for example, referring to the axial thickness T3 of the flow channel in Fig. 5) of the injection molding material 130 within the flow channels (116c, 116d) is smaller than the axial thickness (for example, referring to axial thickness T1 of the weight-deducting hole in Fig. 5) of the injection molding material in the weight-deducting hole (112c, 112d). In some embodiments of the present invention, an axial depth of the two flow channels (116c, 116d) is equal to the stacked axial thickness of a single, two or three silicon steel sheets (for example, referring to the axial depth T3 of the flow channels (116a, 116b) in Fig. 5).

In some embodiments of the present invention, an axial thickness of the magnets (114a, 114b, 114c, 114d) is smaller than an axial thickness of each silicon steel lamination 110b (for example, the axial thickness T2 is smaller than the axial thickness T1 in Fig. 5). Therefore, when the injection molding material is flown into the magnet pocket (113a, 113b, 113c, 113d), the injection molding material is flown across the magnet (114a, 114b, 114c, 114d) from the air gap at one end to the air gap at the other end, so that the injection molding material can fully fill the magnet pocket (113a, 113b, 113c, 113d) to enclose and fix the magnets (114a, 114b, 114c, 114d).

The motor rotor structure disclosed herein is designed for a silicon steel sheet or layer with a small air gap. Using a larger weight-deducting hole to replace the air gap as a plastic injection port with a flow channel can effectively optimize injection molding of the silicon steel laminations stacked in a staggered manner. After stacking the silicon steel laminations, there is a risk that the magnet pockets cannot be filled with injection molding material due to the small cross-sectional area of the air gap. In addition, using weight-deducting holes with flow channels can reduce the number of injection ports, thereby simplifying the complexity of the mold channels, and optimize injection molding material utilization. Double V-shaped magnet pockets can also be designed to add flow channels between the large and small magnet pockets to effectively fill the small magnet pockets.

## Claims

1. A motor rotor structure (100), comprising:
a silicon steel body (110) comprising a plurality of stacked silicon steel laminations (110a, 110b), wherein each silicon steel lamination (110a, 110b) comprises a plurality of stacked silicon steel thin sheets (118) and comprises:
at least one magnet pocket (113, 113a-d) and at least one corresponding weight-deducting hole (112, 112a-d), wherein the weight-deducting hole (112, 112a-d) is closer to a central shaft (110c) of the silicon steel body (110) than the magnet pocket (113, 113a-d); and
at least one magnet (114, 114a-d) disposed in the magnet pocket (113, 113a-d) to form an air gap (115, 115a-d) between the magnet (114, 114a-d) and the magnet pocket (113, 113a-d), wherein a flow channel (116, 116a-d) is connected between the air gap (115, 115a-d) and the weight-deducting hole (112, 112a-d); and
an injection molding material (120) filled into the weight-deducting hole (112, 112a-d) and flown through the flow channel (116, 116a-d), the air gap (115, 115a-d), and entered into the magnet pocket (113, 113a-d), and cured to fix the magnet (114, 114a-d).

2. The motor rotor structure (100) of claim 1, wherein at each silicon steel lamination (110a, 110b), the injection molding material (120) within the flow channel (116, 116a-d) has an axial thickness (T3) smaller than that (T1) of the injection molding material (120) within the weight-deducting hole (112, 112a-d) or the air gap (115, 115a-d).

3. The motor rotor structure (100) of claim 2, wherein the injection molding material (120) within the flow channel (116, 116a-d) has an axial thickness (T3) greater than or equal to that of each silicon steel thin sheet (118).

4. The motor rotor structure (100) of claim 1, comprising two magnet pockets (113a-b) arranged in a V-shape, wherein the weight-deducting hole (112, 112a-b) is connected to one of the two magnet pockets (113a-b) by a corresponding one of two flow channels (116a-b).

5. The motor rotor structure (100) of claim 4, wherein the weight-deducting hole (112, 112a-b) has a dividing strip (118a) having a thickness of a single silicon steel sheet, and the dividing strip (118a) is connected to a dividing wall (118b) between the two flow channels (116a-b).

6. The motor rotor structure (100) of claim 1, comprising relatively large two first magnet pockets (113a-b) arranged in a first V-shape and relatively small two second magnet pockets (113c-d) arranged in a second V-shape, wherein the weight-deducting hole (112, 112a-b) is connected to the two first magnet pockets (113a-b) by two first flow channels (116a-b) respectively, and the two first magnet pockets (113a-b) are connected to the two second magnet pockets (113c-d) by two second flow channels (116c-d) respectively.

7. The motor rotor structure (100) of claim 6, wherein at each silicon steel lamination (110a, 110b), the injection molding material (120) within the first or seond flow channels (116a-d) has an axial thickness (T3) smaller than that (T1) of the injection molding material (120) within the weight-deducting hole (112, 112a-d).

8. The motor rotor structure (100) of claim 1, wherein the air gap (115a-b) is closer to the central shaft (110c) of the silicon steel body (110) than the magnet (114, 114a-d).

9. The motor rotor structure (100) of claim 8, wherein an opening area of the weight-deducting hole (112, 112a-d) is larger than an opening area of the air gap (115, 115a-d).

10. The motor rotor structure (100) of claim 1, wherein an axial thickness (T2) of the magnet (114, 114a-d) is smaller than an axial thickness (T1) of each silicon steel lamination (110a, 110b).

## Amended claims

### Amended claims in accordance with Rule 137(2) EPC.

1. A motor rotor structure (100), comprising:
a silicon steel body (110) comprising a plurality of stacked silicon steel laminations (110a, 110b), wherein each silicon steel lamination (110a, 110b) comprises a plurality of stacked silicon steel thin sheets (118) and comprises:
two magnet pockets (113, 113a-d) and a material-filling hole (112, 112a-d), wherein the material-filling hole (112, 112a-d) is closer to a central shaft (110c) of the silicon steel body (110) than the magnet pocket (113, 113a-d); and
two magnets (114, 114a-d) disposed in the two magnet pockets (113, 113a-d) respectively to form two air gaps (115, 115a-d) between the respective magnets (114, 114a-d) and the respective magnet pockets (113, 113a-d), wherein two flow channels (116, 116a-d) are connected between the two air gaps (115, 115a-d) and the material-filling hole (112, 112a-d); and
an injection molding material (120) filled into the material-filling hole (112, 112a-d) and flown through the two flow channels (116, 116a-d), the two air gaps (115, 115a-d), and entered into the two magnet pockets (113, 113a-d), and cured to fix the two magnets (114, 114a-d) , **characterized in that**
the material-filling hole (112, 112a-b) has a dividing strip (118a) having a thickness of a single silicon steel sheet, and the dividing strip (118a) is connected to a dividing wall (118b) between the two flow channels (116a-b), the dividing wall (118b) has a thickness of a single silicon steel sheet.

2. The motor rotor structure (100) of claim 1, wherein at each silicon steel lamination (110a, 110b), the injection molding material (120) within the flow channel (116, 116a-d) has an axial thickness (T3) smaller than that (T1) of the injection molding material (120) within the material-filling hole (112, 112a-d) or the two air gaps (115, 115a-d).

3. The motor rotor structure (100) of claim 2, wherein the injection molding material (120) within the flow channel (116, 116a-d) has an axial thickness (T3) greater than or equal to that of each silicon steel thin sheet (118).

4. The motor rotor structure (100) of claim 1, wherein the two magnet pockets (113a-b) are arranged in a V-shape.

5. The motor rotor structure (100) of claim 1, comprising relatively large two first magnet pockets (113a-b) arranged in a first V-shape and relatively small two second magnet pockets (113c-d) arranged in a second V-shape, wherein the material-filling hole (112, 112a-b) is connected to the two first magnet pockets (113a-b) by two first flow channels (116a-b) respectively, and the two first magnet pockets (113a-b) are connected to the two second magnet pockets (113c-d) by two second flow channels (116c-d) respectively.

6. The motor rotor structure (100) of claim 5, wherein at each silicon steel lamination (110a, 110b), the injection molding material (120) within the first or second flow channels (116a-d) has an axial thickness (T3) smaller than that (T1) of the injection molding material (120) within the material-filling hole (112, 112a-d).

7. The motor rotor structure (100) of claim 1, wherein the two air gaps (115a-b) are closer to the central shaft (110c) of the silicon steel body (110) than the two magnets (114, 114a-d).

8. The motor rotor structure (100) of claim 7, wherein an opening area of the material-filling hole (112, 112a-d) is larger than an opening area of one of the two air gaps (115, 115a-d).

9. The motor rotor structure (100) of claim 1, wherein an axial thickness (T2) of the two magnets (114, 114a-d) is smaller than an axial thickness (T1) of each silicon steel lamination (110a, 110b).
